# EUROPÄISCHE PATENTSCHRIFT

(11) **EP 1 202 787 B1**
(45) Veröffentlichungstag und Bekanntmachung des Hinweises auf die Patenterteilung: **12.02.2003**
(21) Anmeldenummer: 00958109.1
(22) Anmeldetag: 01.07.2000
(51) Int. Cl.: B01D 33/333, B01D 33/37, B01D 33/50, B01D 33/76, B01D 33/80

(54) **SIEBVORRICHTUNG**
SIEVING DEVICE
DISPOSITIF DE CRIBLAGE

(30) Priorität: 28.07.1999 DE 19935321
(43) Veröffentlichungstag der Anmeldung: 08.05.2002
(73) Patentinhaber: Geiger International GmbH & Co. Technology KG, 76185 Karlsruhe (DE)
(72) Erfinder: MARZLUF, Werner, D-76287 Rheinstetten (DE)
(74) Vertreter: Jany, Peter, Dr.
(86) Internationale Anmeldenummer: DE0002210
(87) Internationale Veröffentlichungsnummer: WO01008780

(56) Entgegenhaltungen:
- DE-A- 19 654 132
- DE-B- 1 138 740
- FR-A- 749 373
- US-A- 1 864 359
- US-A- 4 892 652

## Beschreibung

Die Erfindung betrifft eine Siebvorrichtung zum mechanischen Abscheiden und Herausfördern von festen Bestandteilen, Festkörpern oder Feststoffen aus einer in einem Gerinne fließenden Flüssigkeit, insbesondere Sieb- oder Filterrechen für Prozeß-, Kühlwasser- oder Abwasserströmungen oder in Klär- oder Wasserkraftanlagen, nach dem Oberbegriff des Anspruchs 1.

Derartige Siebvorrichtungen werden üblicherweise mit einer Anzahl von im wesentlichen quer zur Fließrichtung des Flüssigkeitsstroms ausgerichteten Siebfeldern versehen, die in der Regel untereinander verkettet sind und ein umlaufendes, in den Flüssigkeitsstrom eintauchendes Endlossiebband bilden, sowie mit einem Antrieb für das Endlossiebband, wodurch das Abscheiden und Herausfördern der Feststoffe aus dem Flüssigkeitsstrom vorzugsweise kontinuierlich erfolgen kann. Das Endlossiebband überdeckt bei sogenannten querdurchströmten Ausführungen in aller Regel den Querschnitt des Flüssigkeitsstroms vollständig, so daß die Feststoffe die Siebvorrichtung nicht passieren können, sofern ihre Abmessungen nicht größer als die Spalt- oder Maschenweite der Siebfelder sind und sich somit an den Siebfeldern abscheiden.

Durch die Umlaufbewegung des Endlossiebbandes werden die an den Siebfeldern abgeschiedenen Feststoffe aus der Flüssigkeitsströmung nach oben gefördert und an einer über dem Wasserspiegel liegenden Abwurfstelle von den Siebfeldern abgeworfen oder abgenommen. Mittels Abspritzen der Siebfelder an der Abwurfstelle kann eine vollständige Siebfeldabreinigung erfolgen, bevor die Siebfelder wieder in den Flüssigkeitsstrom eintauchen.

Solche Siebvorrichtungen sind in verschiedenen Ausgestaltungen bekannt:

Eine erste Variante umfaßt ein aus rechteckig geformten Siebfeldern gebildetes Endlossiebband, dessen Siebfelder untereinander gelenkig verbunden sind. Die einzelnen Siebfelder sind gegeneinander um eine horizontale Achse verschwenkbar. Das Endlossiebband wird in den Flüssigkeitsstrom eingetaucht, wodurch ein stromaufwärts liegender Abschnitt und ein stromabwärts liegender Abschnitt des Endlossiebbandes vom Flüssigkeitsstrom durchströmt werden. Der stromaufwärts liegende Abschnitt und der stromabwärts liegende Abschnitt des Endlossiebbandes sind über eine obere und eine untere Umlenkung miteinander verbunden, wobei an der oberen Umlenkung üblicherweise eine Abspritzeinrichtung für die Siebfelder vorgesehen ist.

Nachteilig bei diesem Stand der Technik, der auch als "querdurchströmte" Ausführungsform bezeichnet wird, ist, daß der gewünschte Reinigungseffekt des Flüssigkeitsstroms im wesentlichen bereits beim Durchströmen des stromaufwärts liegenden Abschnitts des Endlossiebbandes erzielt wird, aber dennoch auch der stromabwärts liegende Abschnitt des Endlossiebbandes vom Flüssigkeitsstrom passiert werden muß, so daß sich der beim Durchströmen des Endlossiebbandes unvermeidliche Druckverlust verdoppelt.

Dieser Druckverlust entspricht einem meist unerwünschten Abfall des Flüssigkeitsspiegels, der zum Teil durch Einsatz von Pumpen und dergleichen wieder angehoben werden muß. Der Nachteil des Druckverlustes ist sowohl für Abwasseranlagen, bei denen durch Pumpen oder andere Maßnahmen für einen Ausgleich gesorgt wird, als auch für Kühlwasseranlagen, die ein bevorzugtes Anwendungsgebiet der vorliegenden Erfindung darstellen, gegeben, Bei Kühlwasseranlagen sind für die gesamte Wassermenge große Hauptkühlwasserpumpen vorhanden. Der zusätzliche Druckverlust entspricht einem niedrigeren Wasserspiegel in der Pumpenkammer, der von den Kühlwasserpumpen mit überwunden werden muß. Dies führt zu einem erheblichen Mehraufwand an Energie und somit Betriebskosten. Auch die erforderliche Baulänge kann insbesondere aus Kostengründen nachteilig sein.

Um nur den für den Reinigungseffekt unumgänglichen Druckverlust nur jeweils eines durchströmten Siebfeldes in Kauf nehmen zu müssen, wird in einer zweiten Variante der bekannten Siebvorrichtungen der Flüssigkeitsstrom durch bauliche Maßnahmen geteilt und jeweils etwa hälftig um ca. 90 Winkelgrade nach links bzw. nach rechts umgelenkt. Das Endlossiebband wird in diesem Fall so in den Flüssigkeitsstrom eingetaucht, daß die Siebfelder längs der ursprünglichen Fließrichtung des Flüssigkeitsstroms ausgerichtet sind. Eine Hälfte des geteilten Flüssigkeitsstroms wird dann nach links durch den linken Abschnitt des Endlossiebbandes und die andere Hälfte des Flüssigkeitsstroms nach rechts durch den rechten Abschnitt des Endlossiebbandes geleitet. Nach der Durchströmung des Endlossiebbandes werden die beiden Hälften des Flüssigkeitsstroms wieder umgelenkt und zusammengeführt.

Diese zweite Variante kann sowohl in der Weise erfolgen, daß der Flüssigkeitsstrom vom Inneren des Endlossiebbandes durch dieses hindurch nach außen strömt, als auch umgekehrt. Entsprechend bezeichnet man diese Ausführungsformen auch als "von innen nach außen" oder als "von außen nach innen". Dem Vorteil, daß der Flüssigkeitsstrom das Endlossiebband so nur einmal durchströmt und dadurch nur ein entsprechend kleinerer Druckverlust zu verzeichnen ist, steht allerdings der Nachteil von aufwendigen und teuren baulichen Maßnahmen gegenüber. Außerdem entstehen durch die Strömungsumlenkungen erhebliche Reduktionsfaktoren, was zur Leistungsminderung der Durchsatzmenge oder zur Vergrößerung der Vorrichtung führt. Darüber hinaus bedingt die zweifache Umlenkung des Flüssigkeitsstroms eine unverhältnismäßig große Einbaulänge in Richtung der Gesamtfließrichtung, die oft gar nicht oder nur unter Inkaufnahme von erheblichen Mehrkosten zur Verfügung steht.

Um diese Probleme zu lösen, ist in der Anmeldung
DE 19654132 A1 der Anmelderin vorgeschlagen worden, eine Siebvorrichtung der ersten Variante mit Siebfeldern auszustatten, die im stromabwärts liegenden hinteren Abschnitt des Endlossiebbandes aus diesem herausklappbar sind, um in einer Offenstellung den Strömungsquerschnitt größtenteils freizugeben. Bauliche Maßnahmen der eben beschriebenen zweiten Variante entfallen hierdurch; die Siebfelder werden im wesentlichen dennoch nur einmal durchströmt, so daß der Gesamtdruckverlust vorteilhaft gering bleibt. Allerdings wird der Aufbau des Endlossiebbandes hierdurch verkompliziert und es muß einiger Aufwand getrieben werden, um die Dichtheit der geschlossenen Siebfelder im vorderen Abschnitt des Endlossiebbandes zu gewährleisten.

Ferner hat auch diese querdurchströmte Ausführungsform den Nachteil, daß durch die von der Schmutzwasser- zur Reinwasserseite umlaufenden Siebfelder ein Teil des daran haftenbleibenden Schmutzgutes von der Schmutzwasser- zur Reinwasserseite übertragen wird, was zur Verschmutzung der Reinwasserseite führt.

Sowohl die "innen-außen" und "außen-innen" als auch insbesondere die "querdurchströmten" Ausführungsformen nach dem Stand der Technik weisen den Nachteil auf, daß sich durch Sedimentationsprozesse im Bereich zwischen den Siebfeldern Schmutz am Boden ansammelt und mit der Zeit den Lauf der Siebfelder beeinträchtigen kann. Ferner sind die bekannten Vorrichtungen konstruktiv aufwendig, da sie jeweils zwei Kettenzüge (innen/außen oder links/rechts) für den Transport der Siebfelder erfordern.

Ausgehend von diesem Stand der Technik liegt der Erfindung die Aufgabe zugrunde, eine Siebvorrichtung der eingangs genannten Art zu schaffen, die einen möglichst geringen Druckverlust im Flüssigkeitsstrom mit einer, in Fließrichtung gesehen, geringen Baulänge der Vorrichtung und einem einfachen Aufbau des Endlossiebbandes kombiniert.

Diese Aufgabe wird erfindungsgemäß durch eine Siebvorrichtung mit den Merkmalen des beigefügten Anspruchs 1 gelöst.

Bevorzugte Ausgestaltungen und Weiterbildungen der Erfindung ergeben sich aus den Ansprüchen 2 bis 36 und der nachfolgenden Beschreibung mit zugehörigen Zeichnungen.

Eine erfindungsgemäße Siebvorrichtung zum mechanischen Abscheiden und Herausfördern von festen Bestandteilen, Festkörpern oder Feststoffen aus einer in einem Gerinne fließenden Flüssigkeit umfaßt also eine Anzahl von im wesentlichen quer zur Fließrichtung des Flüssigkeitsstroms ausgerichteten Siebfeldern, die ein umlaufendes, in den Flüssigkeitsstrom eintauchendes Endlossiebband bilden, in dem mehrere in Bewegungsrichtung des Endlossiebbands aufeinanderfolgende, nebeneinander angeordnete Siebfelder eine gemeinsame Siebfläche in dem Gerinne bilden, sowie einen Antrieb für das Endlossiebband, wobei die Siebfelder in dem Endlossiebband derart aufeinanderfolgend angeordnet sind, daß die Umlaufbewegung des Endlossiebbandes im wesentlichen insgesamt innerhalb einer einzigen Ebene gehalten ist, wobei die Schwenkachsen, um die die Siebfelder an Umlenkpunkten des Endlossiebbandes verschwenkt werden, senkrecht zur Siebfläche liegen.

Erfindungsgemäß ist erkannt worden, daß die gelenkige Verbindung zwischen den einzelnen Siebfeldern so umgestaltet werden kann, daß die kettenartige Beweglichkeit der Siebfelder nicht, wie im bisherigen Stand der Technik durchgängig der Fall, senkrecht zur Wirkebene des Endlossiebbandes gegeben ist - also die Schwenkachsen zwischen den Siebfeldern in der Wirkebene des Endlossiebbandes liegen -, sondern daß die einzelnen Siebfelder innerhalb der Wirkebene des Endlossiebbandes gegeneinander verschwenkbar sein können, um zu erreichen, daß das Endlossiebband nicht zwangsläufig zwei in Strömungsrichtung hintereinander liegende Abschnitte aufweist.

Die Erfindung vereinigt also die Vorteile der beiden oben beschriebenen Varianten der bekannten Siebvorrichtungen, ohne deren Nachteile in Kauf zu nehmen: Der Flüssigkeitsstrom durchströmt entweder den einen Abschnitt oder den anderen Abschnitt des Endlossiebbandes genau einmal und muß deswegen nur ein einziges Siebfeld passieren, was in einem vorteilhaft niedrigen Druckverlust resultiert. Da beide Siebbandabschnitte nebeneinander statt hintereinander angeordnet sind, entfällt gleichzeitig die Notwendigkeit einer Umlenkung des Flüssigkeitsstroms, so daß auf aufwendige Baumaßnahmen verzichtet werden kann und sich die Baulänge der Gesamtvorrichtung erheblich verkürzt, was einen bedeutsamen wirtschaftlichen Vorteil durch erhebliche Einsparungen bei den Bauwerkskosten darstellen kann.

Die erfindungsgemäße Vorrichtung hat jedoch nicht nur Vorteile hinsichtlich eines geringen. Druckverlustes und einer kurzen Baulänge, sondern vermeidet auch das Problem der Schmutzübertragung von der Schmutzwasser- zur Reinwasserseite, da die eine Seite eines Siebfeldes immer der Schmutzseite und die andere Seite immer der Reinwasserseite zugewandt ist und somit keine "Verschleppung" von Schmutz auf die Reinwasserseite erfolgt. Darüber hinaus wird auch die Schmutzansammlung in der Siebvorrichtung am Grund zwischen Siebfeldern vermieden, da konstruktiv kein solcher Zwischenraum zwischen Siebfeldern vorhanden ist. Eine konstruktive Vereinfachung ergibt sich dadurch, daß nur eine Kette (oder alternativ eine andere Antriebsvorrichtung) für den Antrieb des Endlossiebbands erforderlich ist.

Nach einem bevorzugten zusätzlichen Merkmal wird vorgeschlagen, daß die Ebene der Umlaufbewegung der Siebfelder im wesentlichen senkrecht zur Fließrichtung des Flüssigkeitsstroms angeordnet ist.

Nach einem weiteren vorteilhaften Merkmal wird vorqeschlagen, daß aus Stabilitätsgründen die Siebvorrichtung eine Führungseinrichtung umfaßt, in der wenigstens einige Siebfelder seitlich geführt sind. Dabei kann in einer besonderen Ausführungsform vorgesehen sein, daß die in dem Endlossiebband aufeinanderfolgenden Siebfelder nebeneinander liegen, ohne mittels Verbindungselementen untereinander verkettet zu sein. In diesem Fall können die Siebfelder mittels eines Antriebs in eine Umlaufbewegung gebracht werden, der ein Siebfeld oder mehrere Siebfelder in ihrer Bewegungsrichtung bewegt.

Hierfür ist beispielsweise ein hydraulischer Stößelantrieb mit ein oder mehreren Hydraulikzylindern geeignet, der mit eine Rücklaufsperre, z.B. einer Klinkenrastung, versehen sein kann, um zu verhindern, daß die Siebfelder eine Rückwärtsbewegung durchführen. Eine solche Rückwärtsbewegung könnte beispielsweise dadurch verursacht werden, daß die aus der Flüssigkeit herausgehobenen, mit Schmutz beladenen Siebfelder schwerer sind als die gereinigten, in die Flüssigkeit zurücklaufenden Siebfelder, so daß ein entgegen der Umlaufbewegung des Endlossiebbandes wirkendes Rückstellmoment entsteht. Wenn die Siebfelder nicht untereinander verkettet sind, wird die Antriebskraft, die auf ein Siebfeld oder mehrere Siebfelder ausgeübt wird, durch die aneinanderstoßenden Siebfelder von einem Siebfeld auf das andere Siebfeld entlang des Endlossiebbandes übertragen. Bei mindestens zwei Hydraulikzylindern kann ein weitgehend kontinuierlicher Bewegungsablauf erreicht werden, wenn der eine Zylinder schon die Vortriebsfunktion übernimmt, bevor der andere seine Funktion beendet hat.

In einer bevorzugten Ausführungsform sind die Siebfelder einer erfindungsgemäßen Siebvorrichtung mittels Verbindungselementen, z.B. Verbindungsstangen untereinander verkettet. Die hat Vorteile hinsichtlich der Übertragung der Kraft zum Bewegen des Endlossiebbandes in seiner Umlaufbewegung und der Führung der Siebfelder. Besonders bevorzugt ist dabei, wenn die Verbindungselemente Teile einer Antriebskette für das Endlossiebband, insbesondere Laschen einer Antriebskette bilden. Dies ermöglicht eine vorteilhafte Konstruktion unter Verwendung einer geringen Anzahl erforderlicher Bauteile.

Die Siebfelder können kreisförmig oder polygonförmig ausgebildet sein. Bei diesen Ausführungsformen ist jedoch ggf. der Nachteil in Kauf zu nehmen, daß sich zwei benachbarte Siebfelder zumindest in einem Teilbereich überdecken bzw. überlappen, so daß die Flüssigkeit in diesem Bereich zwei Siebfelder durchströmen muß. Ferner ist bei solchen Ausführungsformen die seitliche Abdeckung der Siebfelder zum Verhindern des ungefilterten Durchtritts von Flüssigkeit schwieriger und kann die Verwendung spezieller Einsatzstücke, die die zwischen benachbarten Siebfeldern verbleibenden Zwischenräume zum Verhindern des Durchtritts von Flüssigkeit abdecken, erforderlich machen.

Besondere Vorteile ergeben sich, wenn die Siebfelder sichelförmig ausgebildet sind. Hierunter wird im wesentliche eine Form verstanden, bei der das in Bewegungsrichtung der Siebfelder betrachtete vordere und hintere Ende eines Siebfeldes die Kontur eines Abschnitts eines Kreisbogens aufweist, wobei bevorzugt die Radien der die Außenkontur am vorderen und hinteren Ende erzeugenden Kreise gleich sind. Diese Ausführungsform hat den Vorteil, daß die Siebfelder aufeinanderfolgend und entlang der von den Kreisabschnitten gebildeten Außenköntur in permanentem Kontakt aneinanderliegend sowohl geradlinig bewegt als auch um eine Umlenkung umgelenkt werden können, ohne daß sich bei einer Veränderung der Bewegungsrichtung der Siebfelder, beispielsweise bei der Umlenkung, zwischen benachbarten Siebfeldern ein Spalt bildet, durch den Flüssigkeit ungefiltert hindurchtreten kann.

Ein permanenter Kontakt der in der Endloskette aufeinanderfolgenden Siebfelder ist jedoch eventuell gar nicht gewünscht, z.B. aus Gründen der damit verbundenen Reibung, oder läßt sich aus technischen Gründen, beispielsweise im Hinblick auf die erforderliche Fertigungsgenauigkeit oder die gewählte Antriebsvorrichtung, nicht realisieren. Die aufeinanderfolgenden Siebfelder können in solchen Fällen jeweils in einem kleinen Spaltabstand zueinander in dem Endlossiebband angeordnet werden, wobei der Spaltabstand vorteilhafterweise nicht größer als die Maschenweite des Siebgewebes ist.

Es kann aber in manchen Ausführungsformen zweckmäßig oder konstruktionsbedingt erforderlich sein, den Spaltabstand zwischen in dem Endlossiebband aufeinanderfolgenden Siebfeldern größer als die Maschenweite der Siebelemente zu machen. Zur Abdichtung des Spaltes können dann zusätzliche Abdichtelemente vorgesehen sein. Solche Abdichtelemente können beispielsweise elastisch verformbare Teile, eine abdeckende Dichtleiste oder ein Nut-Feder-System, bei dem die Feder eines Siebelements in die Nut eines benachbarten Siebelements eingreift, sein.

Gemäß einer ersten Ausführungsform sind die sichelförmig ausgebildeten Siebfelder vorzugsweise so geformt, daß ihre Außenkonturen jeweils von zwei sich schneidenden Abschnitten zweier Kreise mit identischem Radius gebildet sind, wobei der Mittelpunkt des ersten Kreises, der den konvexen Abschnitt der Außenkontur des Siebfeldes bildet, auf dem zweiten Kreis liegt, der den konkaven Abschnitt der Außenkontur des Siebfeldes bildet. Aufgrund dieser Geometrie ist es möglich, daß die Siebfelder innerhalb der Ebene von deren Wirkfläche gegeneinander verschwenkt werden können, ohne Lücken zwischen ihnen entstehen zu lassen und ohne daß sich die Siebfelder beim Verschwenken übereinander schieben; denn letzteres würde eine im Hinblick auf die Optimierung des Druckverlustes nachteilige, doppelte Überdeckung der Siebfläche verursachen.

Diese Vorteile werden auch mit einer zweiten Ausführungsform der sichelförmig ausgebildeten Siebfelder erzielt, bei denen die Außenkonturen der sichelförmigen Siebfelder jeweils von zwei sich nicht schneidenden Abschnitten zweier Kreise mit identischem Radius und zwei die Kreisabschnitte verbindenen, geradlinigen oder bogenförmigen Verbindungsabschnitten gebildet sind. Durch die Verbindungsabschnitte sind derartige Siebfelder im Vergleich zu der ersten Ausführungsform länger, haben also eine langgestreckte Sichelform, was den Vorteil mit sich bringt, daß die Anzahl der Siebfelder in einem Endlossiebband gegebener Länge geringer sein kann.

Das größere Verhältnis der Längsteilung des Endlossiebbandes zur Breite der Siebfelder kann jedoch auch gegenüber der ersten Ausführungsform nachteilig sein. Dies liegt daran, daß die Umlenkung des Endlossiebbandes vorzugsweise um Gelenke erfolgt, deren Achsen im Mittelpunkt der Kreise liegen, die die kreisförmigen Abschnitte der Außenkonturen bilden. Wenn deren Abstand durch die Verbindungsabschnitte größer ist, ist ein größerer Kurvenradius zum Umlenken des Endlossiebbandes erforderlich. Bei der ersten Ausführungsform der sichelförmigen Siebfelder ergibt sich dagegen ein vorteilhaft kleiner Kurvenradius bei der Umlenkung der Siebfelder.

Ein erfindungsgemäßes Endlossiebband kann mit derart geformten Siebfeldern besonders einfach dadurch realisiert werden, daß die sichelförmigen Siebfelder über Verbindungselemente, insbesondere Verbindungsstangen, untereinander verkettet werden, wobei die Verbindungselemente jeweils einerseits im Mittelpunkt des ersten, den konvexen Abschnitt der Außenkontur eines Siebfeldes bildenden Kreises an diesem Siebfeld angelenkt und andererseits, entlang des konvexen Abschnitts der Außenkontur des benachbarten Siebfeldes verschiebbar, am benachbarten Siebfeld im Mittelpunkt von dessen ersten, den konvexen Abschnitts von dessen Außenkontur bildenden Kreises angelenkt sind.

Aus Stabilitätsgründen können diese Verbindungselemente auch entlang des konvexen Teils der Außenkontur des jeweils zugehörigen benachbarten Siebfeldes an diesem geführt sein.

Zweckmäßigerweise sind die Verbindungselemente der einzelnen Siebfelder auf der Reinwasserseite des Endlossiebbandes angeordnet, um nachteilige Ablagerungen von Feststoffen insbesondere an den gelenkigen Teilen zu verhindern.

Besondere Vorteile ergeben sich, wenn die insbesondere als Verbindungsstangen oder Kettenteile ausgebildeten Verbindungselemente der verketteten Siebfelder in ihrer Gesamtheit eine Antriebskette für das Endlossiebband bilden. Es ist dann insbesondere möglich, die aus den verketteten Verbindungselementen bestehende Antriebskette einfach an einer oberen Umlenkung des Endlossiebbandes über ein motorgetriebenes Kettenrad laufen zu lassen, um den Antrieb des Endlossiebbandes zu verwirklichen. Zusätzliche bewegliche Teile oder Ankoppelelemente für den Antrieb des Endlossiebbandes können dann entfallen.

Allgemein kann es vorteilhaft sein, wenn der Antrieb eine Antriebskette umfaßt, die an einer oberen Umlenkung des Endlossiebbandes über ein oberes Kettenrad und an einer unteren Umlenkung über ein unteres Kettenrad läuft, da ein Kettenantrieb eine bevorzugte Ausführungsform für einen Antrieb des Endlossiebbandes darstellt. Vorteilhafterweise ist dabei das obere Kettenrad mittels eines Antriebsmotors antreibbar.

Für spezielle Anwendungen kann der Antrieb des Endlossiebbandes auch mittels einer seitlich angeordneten Antriebsmittels vorgenommen werden, an das zumindest ein Teil der Siebfelder auf wenigstens einem Teil der Umlaufbahn des Endlossiebbandes ankoppelbar ist. Ein solches Antriebsmittel kann auch vorteilhafterweise eine Kette umfassen. Ferner können auch andere Antriebe verwirklicht werden, beispielsweise mittels eines Reibrades, einer hydraulischen Stößelsteuerung, eines Linearmotors, eines Zahnriemenantriebs usw.

Ein anderes vorteilhaftes Merkmal kann darin bestehen, daß aus Stabilitätsgründen Siebband-Abstützelemente vorgesehen sind, die auf der Reinwasserseite des Endlossiebbands, vorzugsweise im Bereich der Mittelachse von Siebfeldern angeordnet sind. Sie können dazu dienen, die auf den Siebfeldern lastende, von der Strömung verursachte Kraft aufzunehmen und die Siebfelder abzustützen. Dabei können vorteilhafterweise auch Querverstrebungen zwischen den Abstützelemente oder zu den Wandungen oder der Sohle des Gerinnes vorgesehen sein, um eine sichere Abstützung des Endlossiebbandes zu gewährleisten. Die Siebband-Abstützelemente und die Querverstrebungen sind somit vorzugsweise ortsfest verankert, um die Stabilität der erfindungsgemäßen Siebvorrichtung zu erhöhen.

Die Siebfelder können gleitend auf den Siebband-Abstützelementen abgestützt sein. In einer bevorzugten Ausführungsform können drehbare Stützelemente, z.B. Stützrollen oder Kugeln zur Abstützung des Endlossiebbandes bzw. der Siebfelder auf einem Siebband-Abstützelement vorgesehen sein, die durch das Abrollen eine reibungsfreiere Umlaufbewegung des Endlossiebbandes ermöglichen. Die drehbaren Stützelemente können beispielsweise an den Siebfeldern oder an Verbindungselementen zwischen den Siebfeldern angebracht sein.

Die Geometrie der erfindungsgemäßen Siebvorrichtung ist vorzugsweise so gewählt, daß der sich abwärts bewegende Teil des umlaufenden Endlossiebbandes und der sich aufwärts bewegende Teil des umlaufenden Endlossiebbandes jeweils etwa eine rechte bzw. linke Hälfte des Flüssigkeitsstroms abdecken, wobei dazwischen ein feststehendes Mittelführungsteil angeordnet ist. Das Mittelführungsteil kann aus Stabilitätsgründen im Bereich seines unteren Endes ortsfest verankert sein, so daß es dem Strömungsdruck des Flüssigkeitsstroms nicht nachgibt. Das Mittelführungsteil hat den Vorteil, daß zumindest ein Teil der Siebfelder in ihm geführt werden kann, was die Stabilität der Gesamtvorrichtung vorteilhaft erhöht.

In dem Mittelführungsteil können vorzugsweise Siebfelder geführt sein. Die Führung kann beispielsweise gleitend oder mittels an den Siebfeldern oder Verbindungselementen angeordneten, inneren drehbaren Führungselementen, z.B. Führungsrollen oder Kugeln erfolgen.

Zumindest einige der Siebfelder sollten in einer seitlich, vorzugsweise entlang der den Flüssigkeitsstrom begrenzenden Außenwandung angeordneten Führungseinrichtung geführt werden, so daß nicht zwischen dem Endlossiebband und der Außenwandung aufgrund des Strömungsdrucks des Flüssigkeitsstroms eine Lücke entstehen kann, durch welche die Flüssigkeit ohne Reinigungseffekt hindurchtreten würde. Zweckmäßigerweise ist diese Führung in die Außenwandung selbst eingelassen. Die Führung kann beispielsweise gleitend oder mittels an den Siebfeldern oder Verbindungselementen angebrachten äußeren drehbaren Führungselementen wie Führungsrollen oder Kugeln erfolgen.

Die Siebfelder der erfindungsgemäßen Siebvorrichtung tauchen bevorzugt derart in die Führungseinrichtungen ein, daß die resultierende Siebfläche des Endlossiebbandes den Flüssigkeitsstrom im wesentlichen lückenlos überdeckt. Dies ist insbesondere bei kreisförmig ausgebildeten Siebflächen wichtig.

Die Führungseinrichtungen sind bevorzugt nutartig ausgebildet, und ein Teil oder alle Siebfelder sind bevorzugt an ihren zu den Führungseinrichtungen weisenden Seiten mit Laufrollen versehen, die in die nutartigen Führungseinrichtungen eingreifen. Mit diesen Maßnahmen wird eine Führung des erfindungsgemäßen Endlossiebbandes besonders einfach und robust realisiert.

Nach einer weiteren Ausgestaltung der Erfindung ist eine Anzahl von Sprühdüsen zum Abspritzen der aus dem Flüssigkeitsstrom herausgehobenen Siebfelder des Endlossiebbandes, sowie eine auf der den Sprühdüsen gegenüberliegenden Seite des Endlossiebbandes angeordnete Schmutzrinne vorgesehen. Vorzugsweise erstrecken sich die Sprühdüsen und die Schmutzrinne sowohl über den sich abwärts bewegenden Teil als auch über den sich aufwärts bewegenden Teil des umlaufenden Endlossiebbandes; auf diese Weise wird eine besonders gute Abreinigung der Siebfelder erreicht, da ein solches Abspritzsystem wie ein antiparalleles System wirkt. Besonders vorteilhaft kann die Verwendung von Düsen mit einem selbstreinigenden Dralleffekt sein.

Eine vorteilhafte Ausführungsform eines Siebfeldes besteht darin, daß es aus einem Profilrahmen und einem von diesem gehaltenen Siebelement gebildet ist. Die Maschenweite der Siebfelder bzw. der Siebelemente liegt vorzugsweise zwischen 0,1 mm und 10 mm, insbesondere zwischen 2 mm und 4 mm. Im typischen Einsatzgebiet solcher Siebfelder bietet die erfindungsgemäße Siebvorrichtung die signifikantesten Vorteile gegenüber dem Stand der Technik. Ein weiteres vorteilhaftes Merkmal kann darin bestehen, daß die Siebfelder an ihrem in Bewegungsrichtung hinteren Ende eine Schmutztasche, die beispielsweise durch eine Abkantung eines Profilrahmens oder eine Vertiefung gebildet sein kann, aufweisen, um von dem Siebfeld herabfallenden Schmutz oder Feststoffe mit aus der Flüssigkeit herauszufördern.

Die Geometrie des Endlossiebbandes ist für dessen Umlaufbewegung im einfachsten Fall so ausgebildet, daß die Siebfelder in einer jeweils geradlinigen Bewegung in den Flüssigkeitsstrom eintauchen und aus diesem herausgehoben werden, wobei sie an einem unteren Umlenkpunkt und an einem oberen Umlenkpunkt mit einer im wesentlichen kreisförmigen Bewegung umgelenkt werden.

Weitere Merkmale und Besonderheiten der Erfindung ergeben sich aus den im folgenden näher beschriebenen und in den Zeichnungen dargestellten Ausführungsbeispielen.

Es zeigen:
- Fig. 1: eine schematische Frontansicht einer Siebvorrichtung nach der Erfindung;
- Fig. 2: ein Detail aus Figur 1;
- Fig. 3: eine Seitenansicht des Details aus Figur 2;
- Fig. 4: eine schematische Darstellung einer Variante zu Fig. 3,
- Fig. 5: ein Detail zu Fig. 3,
- Fig. 6: ein abgewandeltes Detail zu Fig. 5,
- Fig. 7: eine schematische Darstellung einer Abwandlung zu Fig. 2,
- Fig. 8: eine Seitenansicht zu Fig. 7,
- Fig. 9: eine seitliche Führung,
- Fig. 10: eine Variante zu Fig. 9,
- Fig. 11: eine teilgeschnittene Draufsicht auf die Siebvorrichtung;
- Fig. 12: einen ersten Schnitt durch die Siebvorrichtung,
- Fig. 13: einen zweiten Schnitt durch die Siebvorrichtung und
- Fig. 14: eine weitere Frontansicht der Siebvorrichtung.

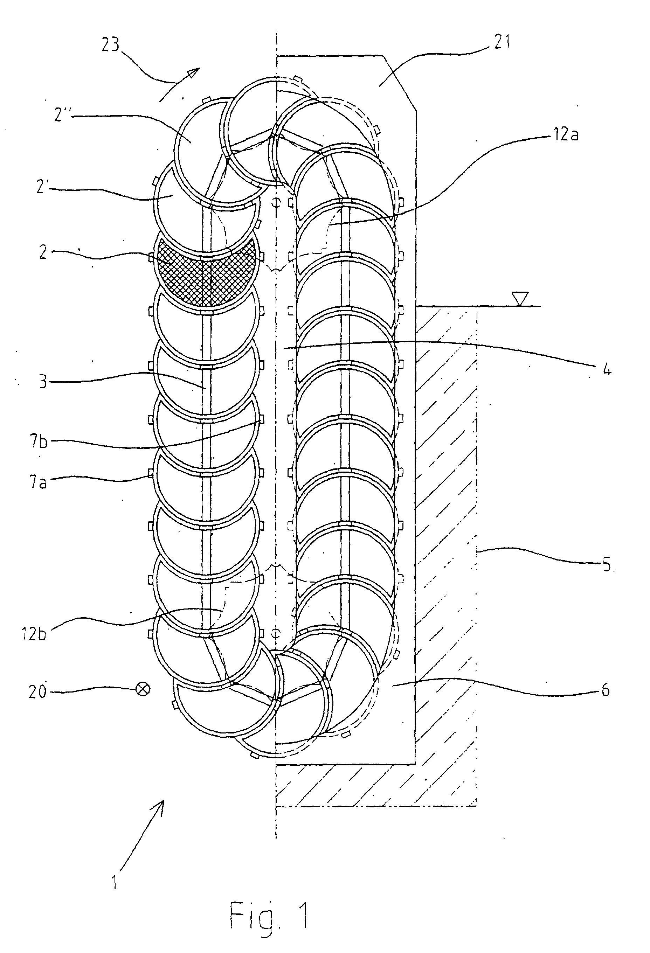

Figur 1 zeigt in einer schematischen Frontansicht eine erfindungsgemäße Siebvorrichtung mit einem Endlossiebband 1, wobei die linke Hälfte der Darstellung das Endlossiebband 1 isoliert zeigt . Dieses Endlossiebband 1 ist quer zur Strömungsrichtung 20 eines hier nicht dargestellten Flüssigkeitsstroms angeordnet und wird von diesem senkrecht zur Zeichenebene durchströmt. Es umfaßt eine Anzahl von sichelförmig ausgebildeten Siebfeldern 2, 2', 2'', die über Verbindungselemente 3 derart verkettet sind, daß sie bei ihrer Umlaufbewegung entlang der Bewegungsrichtung 23 in dem in dieser Ansicht links angeordneten Abschnitt in der Zeichenebene nach oben aus dem Flüssigkeitsstrom herausgehoben, in einem oberen Umlenkpunkt innerhalb der Zeichenebene umgelenkt, dann im rechts angeordneten Abschnitt nach unten in den Flüssigkeitsstrom eingetaucht und schließlich in einem unteren Umlenkpunkt, nach wie vor in ein und derselben Zeichenebene, wieder umgelenkt werden, um ein in sich geschlossenes Endlossiebband 1 zu bilden.

Die Siebfelder 2, 2', 2'' werden dabei an den Umlenkpunkten so gegeneinander verschwenkt, daß die Schwenkachse senkrecht zur Zeichenebene liegt. Aus Gründen der Übersichtlichkeit sind nur bei einem der dargestellten Siebfelder 2 dessen Maschen gezeichnet. Die Verbindungselemente 3 sind Teil einer Kette, die dem Antrieb des Endlossiebbands 1 dient, und werden an einem oberen Kettenrad 12a, das motorisch angetrieben ist, und einem unteren Kettenrad 12b umgelenkt. Die Kettenräder 12a, 12b haben in dem dargestellten Beispiel jeweils acht Zähne; in anderen Ausführungsformen kann auch eine größere oder kleinere Zahl von Zähnen vorgesehen sein, je nach dem Radius der Umlenkung und den Abmessungen der Siebfelder 2, 2', 2''.

Zwischen den nach oben und nach unten läufenden, geradlinigen Abschnitten des dargestellten Endlossiebbandes 1 ist ein Mittelführungsteil 4 angeordnet, welches das Endlossiebband 1 nach innen begrenzt. Die Begrenzung nach außen wird durch die Außenwandung 5 des Flüssigkeitsstroms gebildet. Diese Außenwandung umfaßt randständig nutförmige Führungen 6, in welchen die Siebfelder 2, 2', 2'' mittels daran gelagerten Laufrollen 7 geführt werden. Die Führungen 6 erweitern sich im unteren Umlenkbereich des Endlossiebbandes 1 zu Strömungsblenden, um ein Umströmen der Siebfelder 2, 2', 2'' zu verhindern.

Wie anhand Figur 1 gut erkennbar, tauchen die Siebfelder 2, 2', 2'' in die Führung 6 und in das Mittelführungsteil 4 so weit ein, daß die randseitigen Lücken, die aufgrund der Sichelform der Siebfelder 2, 2', 2'' im Endlossiebband 1 vorhanden sind, von der Führung 6 und dem Mittelführungsteil 4 überdeckt sind. Die aus der Summe der Siebfelder 2, 2', 2'' resultierende Siebfläche des Endlossiebbandes 1 überdeckt im Ergebnis den Querschnitt des Flüssigkeitsstroms im wesentlichen vollständig.

Die Siebfelder 2, 2', 2'' sind mit äußeren Führungsrollen 7a im Bereich der Außenwandung 5 bzw. Führung 6 geführt und mit inneren Führungsrollen 7b im Bereich des Mittelführungsteils 4 geführt.

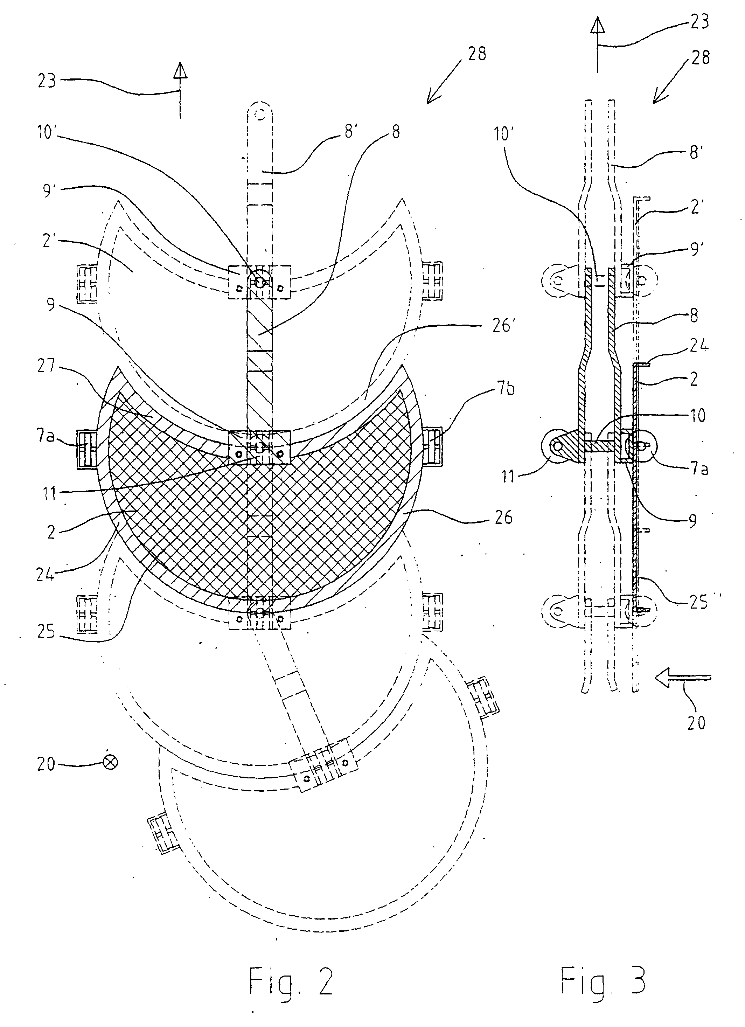

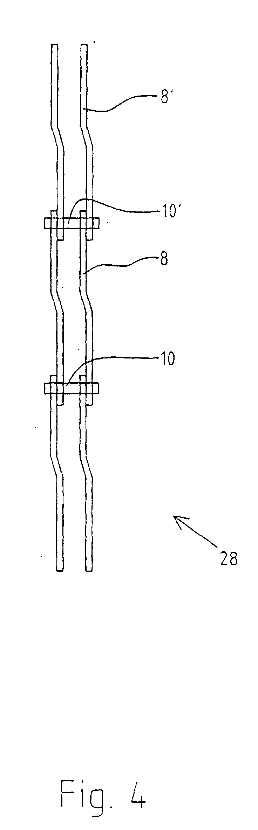

Figur 2 zeigt ein Detail aus Figur 1, anhand dessen die Ausbildung der Siebfelder 2, 2' weiter verdeutlicht wird. Im Zusammenhang mit Figur 3, einer Seitenansicht der Darstellung von Figur 2, soll die Verkettung der Siebfelder 2, 2' über die Verbindungselemente 3, die hier als Verbindungsstangen 8, 8' ausgebildet sind, näher beschrieben werden.

Die Siebfelder 2 umfassen jeweils einen Profilrahmen 24 und ein darin eingesetztes bzw. von dem Profilrahmen 24 gehaltenes Siebelement 25 mit maschenförmigen Durchlaßöffnungen.

Die Außenkontur des Siebfeldes 2 wird durch zwei sich schneidende Abschnitte 26, 27 von Kreisen mit identischem Radius umschrieben, von denen der erste Abschnitt 26 den konvexen Teil der Außenkontur und der zweite Abschnitt 27 den konkaven Teil der Außenkontur bildet. Der Mittelpunkt des Kreises zu dem ersten Abschnitt 26 liegt auf dem konkaven Abschnitt 27 der Außenkontur, so daß zwei benachbarte Siebfelder 2, 2' innerhalb der Zeichenebene gegeneinander verschwenkt werden können, ohne daß in Bewegungsrichtung 23 eine Lücke zwischen dem konvexen Abschnitt 26' der Außenkontur des einen Siebfeldes 2' und dem konkaven Abschnitt 27 der Außenkontur des anderen Siebfeldes 2 entsteht oder eine Überdeckung zweier Siebfelder 2, 2' erfolgt.

Die gelenkige Verbindung von jeweils zwei Siebfeldern 2, 2' erfolgt mittels einer Verbindungsstange 8, die an ihrem einen Ende über eine Befestigungsplatte 9 am Siebfeld 2 - auf dem konkaven Abschnitt 27 von dessen Außenkontur, im Mittelpunkt des den konvexen Abschnitt 26 der Außenkontur bildenden Kreises - starr festgelegt ist, und an ihrem anderen Ende mittels eines Gelenks 10' schwenkbar an der nächsten Befestigungsplatte 9' des nächstfolgenden Siebfeldes 2' befestigt ist. Dies ermöglicht den Siebfeldern 2, 2' die in Figur 2 dargestellte Beweglichkeit bei dennoch hoher Stabilität gegenüber dem Flüssigkeitsstrom.

In Fig. 3 ist zu erkennen, wie die Verbindungsstangen 8, 8' gelenkig miteinander verkettet sind, so daß die Gesamtheit der Verbindungsstangen 8, 8' eine Endlosgliederkette bildet, mit welcher der Antrieb des Endlossiebbandes 1 bewerkstelligt werden kann. Die Verbindungsstangen 8, 8' bilden Laschen einer gekröpften Gliederkette, wobei die Gelenke 10, 10' von den Bolzen der Gliederkette gebildet sind. Ferner erkennt man, daß die Kräfte von den Befestigungsplatten 9 auf die Stützrollen 11 übertragen werden, die auf in Strömungsrichtung 20 hinter den Siebfeldern 2 angeordneten Siebband-Abstützelementen, die in Fig. 3 nicht dargestellt sind, abrollen und das Endlossiebband 1 abstützen. Die insgesamt gebildete Antriebskette 28 kann durch einen Eingriff eines hier nicht dargestellten Kettenrads angetrieben werden.

Die äußeren Führungsrollen 7a und inneren Führungsrollen 7b des Siebfeldes 2 dienen dagegen zum Eingriff in die nutartige Führung 6 bzw. in das Mittelführungsteil 4, wobei sie sowohl eine Führungs- als auch eine Abstützfunktion erfüllen können.

In Fig. 4 ist schematisch eine beispielhafte Abwandlung der Antriebskette 28 dargestellt, bei der die Verbindungsstangen 8, 8' anders gekröpft sind. Die näheren Einzelheiten des Endlossiebbands und der Siebfelder sind in dieser Figur nicht dargestellt.

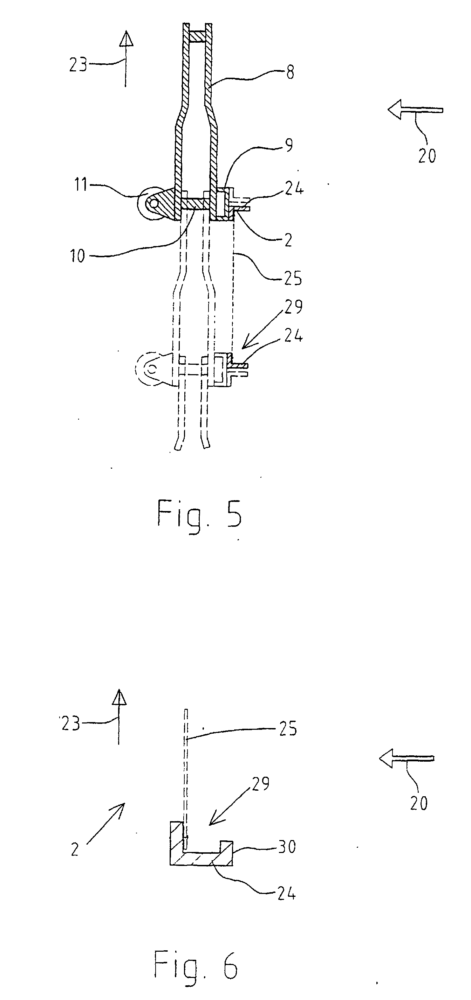

Die Fig. 5 zeigt ein Detail der Fig. 3 ohne die Führungsrolle 7. Man erkennt, wie das Siebfeld 2 mit seinem Profilrahmen 24, in dem das Siebelement 25 befestigt ist, an der Befestigungsplatte 9 befestigt ist.

In Fig. 6 ist ein abgewandeltes Detail zu Fig. 5 dargestellt. Dadurch, daß der Profilrahmen 24 an seinem in Bewegungsrichtung 23 hinteren Ende entgegen der Strömungsrichtung 20 über das Siebelement 25 hervorsteht (Fig. 5), bildet das hintere Ende des Siebfelds 2 eine Schmutztasche 29, die von dem Siebelement 2 abgefallenen Schmutz oder Wassertiere usw. mitnehmen kann. In Fig. 6 ist diese Schmutztasche 29 durch eine zusätzliche Abkröpfung oder Abkantung 30 des Profilrahmens 24 in seiner Bewegungsrichtung 23 mit einer vorderen Festhaltekante ausgestattet, die einen besseren Halt der Stoffe in der Schmutztasche 29 bewirkt.

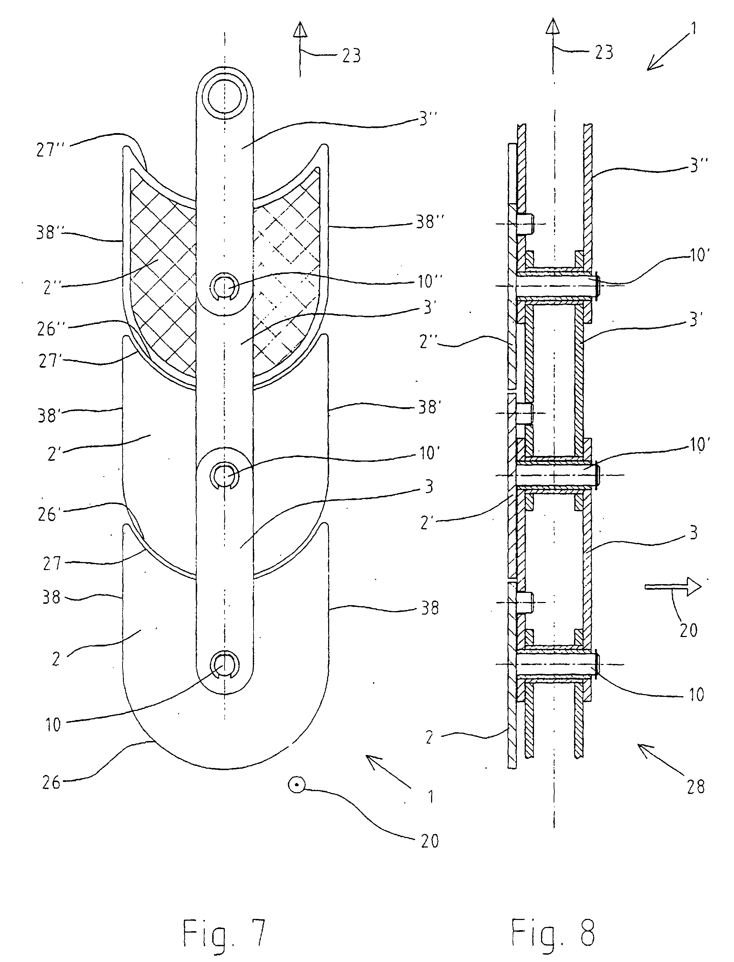

In Fig. 7 ist in einer schematischen Darstellung ein Abschnitt eines abgewandelten Endlossiebbandes dargestellt, bei dem die sichelförmigen Siebfelder, 2, 2', 2'' zwischen dem konvexen 26 und konkaven 27 Abschnitt jeweils durch einen gradlinigen Verbindungsabschnitt 38 verbunden sind, so daß sich die Kreise, deren Abschnitte jeweils die konvexe 26 und konkave 27 Außenkontur bilden, nicht schneiden. Die Verbindungselemente 3 sind untereinander verkettet und sind auch hier einerseits im Mittelpunkt des ersten, den konvexen Abschnitt 26 der Außenkontur eines Siebfelds 2 bildenden Kreises an einem Siebfeld 2 angelenkt und andererseits, entlang des konvexen Abschnitts 26' der Außenkontur des benachbarten Siebfelds 2' verschiebbar, am benachbarten Siebfeld 2' im Mittelpunkt von dessen ersten, den konvexen Abschnitt 26' von dessen Außenkontur bildenden Kreises angelenkt, so daß die Siebfelder 2, 2', 2'' umgelenkt werden können, ohne daß sich zwischen Ihnen ein Spalt öffnet.

In Fig. 7 ist nur in dem Siebfeld 2'' das Rahmenprofil und das Siebgewebe angedeutet, und evtl. vorhandene Führungsrollen 7a, 7b oder Stützrollen 11 sind nicht dargestellt. Die Fig. 8 zeigt eine schematische Seitenansicht eines Endlossiebbands 1 gemäß Fig. 7, wobei die Verbindungselemente 3, 3', 3'' eine Antriebskette 28 bilden.

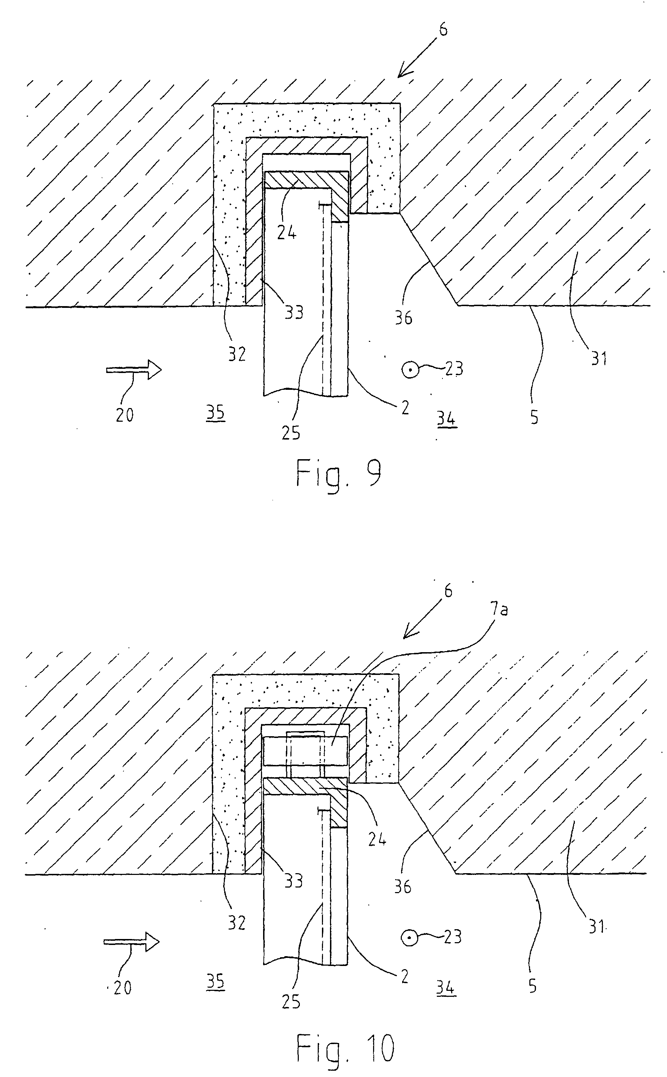

Die Figuren 9 und 10 zeigen seitliche Führungen 6 und Abstützungen der Siebfelder 2 in dem Bauwerk 31. Sie umfassen jeweils eine Führungsnut 32, in die ein Führungsprofil 33 aus Stahl eingelassen ist. In Fig. 9 ist der Profilrahmen 24 des Siebfelds 2 ohne Rollen, d.h. gleitend in dem Führungsprofil 33 geführt, wogegen in Fig. 10 an dem Profilrahmen 24 gelagerte Führungsrollen 7a vorgesehen sind.

Die Lagerfläche, d.h. in Fig. 9 die Auflage des Profilrahmens 24 auf dem Führungsprofil 33 und in Fig. 10 die Auflage der Führungsrolle 7a auf dem Führungsprofil 33 befindet sich in einer strömungsarmen Vertiefung, um die Ablagerung von Schmutz zu minimieren. Die Führungseinrichtung 6 bzw. die Außenwandung 5 weist dagegen auf der Reinwasserseite 34 der Siebfelder 2 eine Anschrägung 36 auf, die dazu dient, die effektive Breite des Siebfeldes 2, die von der Flüssigkeit durchströmt werden kann, zu vergrößern, so daß sich ein geringerer Strömungswiderstand bzw. ein höherer Flüssigkeitsdurchsatz ergibt, da die Siebfläche gegenüber einer Ausführungsform ohne eine solche Anschrägung 36 vergrößert ist.

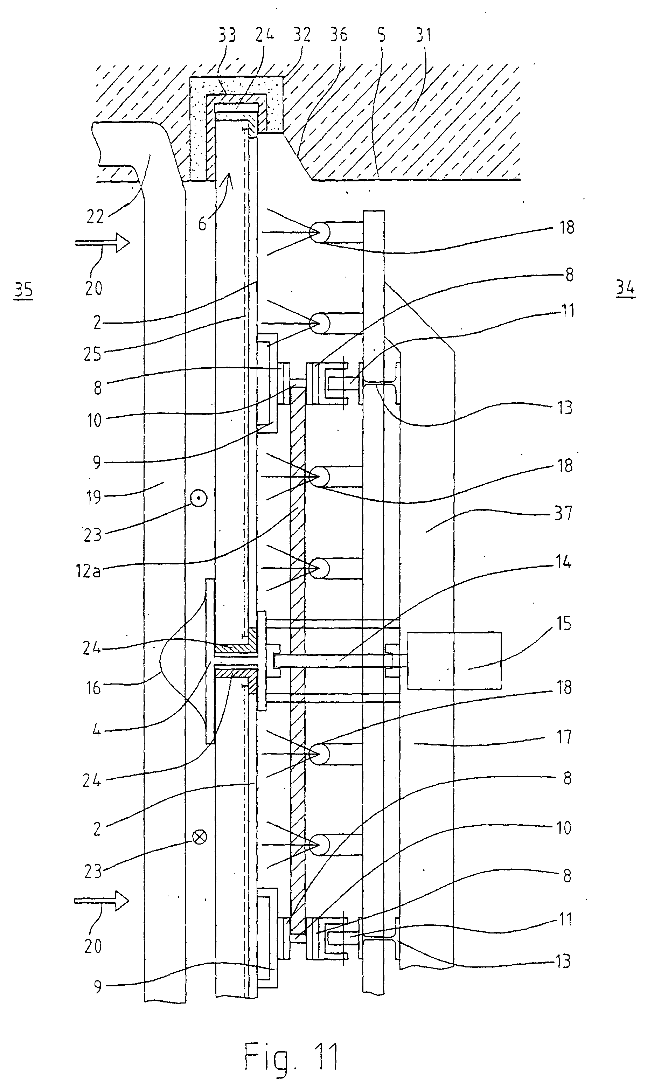

In Figur 11 ist in einer schematischen, teilgeschnittenen Draufsicht im Bereich des oberen Kettenrads 12a verdeutlicht, wie das aus den Siebfeldern 2 bestehende Endlossiebband 1 mittels der aus der Gesamtheit der Verbindungsstangen 8 gebildeten Antriebskette 28 bewegt wird:
Die Verbindungsstangen 8 werden im oberen Umlenkpunkt des Endlossiebbandes 1 an einem Kettenrad 12 vorbeigeführt, wobei die an den Verbindungsstangen 8 angebrachten Kettenbolzen, die die Gelenke 10 bilden, in Eingriff mit dem Kettenrad 12a gelangen. Zum Antrieb des Endlossiebbandes 1 gehören noch eine Antriebswelle 14 und ein Antriebsmotor 15, der beispielsweise als Aufsteckgetriebemotor oder als Motor mit Vorgelege ausgebildet sein kann.

Aus Stabilitätsgründen ist auf der von der Schmutzwasserseite 35 entgegen der Strömungsrichtung 20 gelegenen Reinwasserseite 34 der Siebfelder 2 eine Abstützung mit Siebband-Abstützelementen 13 angeordnet, die mittels einer Querverstrebung 37 verstärkt ist und auf der die Stützrollen 11 der Siebfelder 2 abrollen.

Ebenfalls deutlich erkennbar ist in Figur 11 die Form der nutartigen Führungen 6 in den Außenwandungen 5, in denen die Siebfelder 2 mittels ihrer äußeren Führungsrollen 7a oder, wie in Fig. 11 dargestellt, gleitend geführt sind, sowie die Führung der Siebfelder 2 im Mittelführungsteil 4, die dort mittels ihrer inneren Führungsrollen 7b oder, wie in Fig. 11 dargestellt, gleitend geführt sind. Das Mittelführungsteil 4 kann ebenfalls über ein Abstützelement mit einer Querverstrebung 37 oder einem Siebband-Abstützelement 13 lastaufnehmend verbunden sein. Es weist vorteilhafterweise eine Blende auf, die eine strömungsgünstige Profilierung 16 auf der Schmutzwasserseite 35 aufweisen kann.

Schließlich zeigt Figur 11 die Abreinigung des Endlossiebbandes 1 mittels eines Sprühbalkens 17, der eine Anzahl von Sprühdüsen 18 zum Abspritzen der Siebfelder 2 aufweist. Der Sprühbalken 17 erstreckt sich über die aufwärts bewegten und abwärts bewegten Abschnitte des Endlossiebbandes 1 hinweg, so daß ein zweifaches Abspritzen der einzelnen Siebfelder 2 erfolgt. Die von den Sprühdüsen 18 von den Siebfeldern 2 abgehobenen Feststoffe, Wassertiere usw. fallen zusammen mit dem Sprühwasser in eine auf.der Schmutzwasserseite 35 des Endlossiebbandes 1 angeordnete Schmutzrinne 19 und werden dort über eine Rinne 22 abgeleitet.

Mit einem Richtungspfeil ist der Flüssigkeitsstrom 20 angedeutet, der die erfindungsgemäße Siebvorrichtung durchströmt und von dieser gereinigt wird.

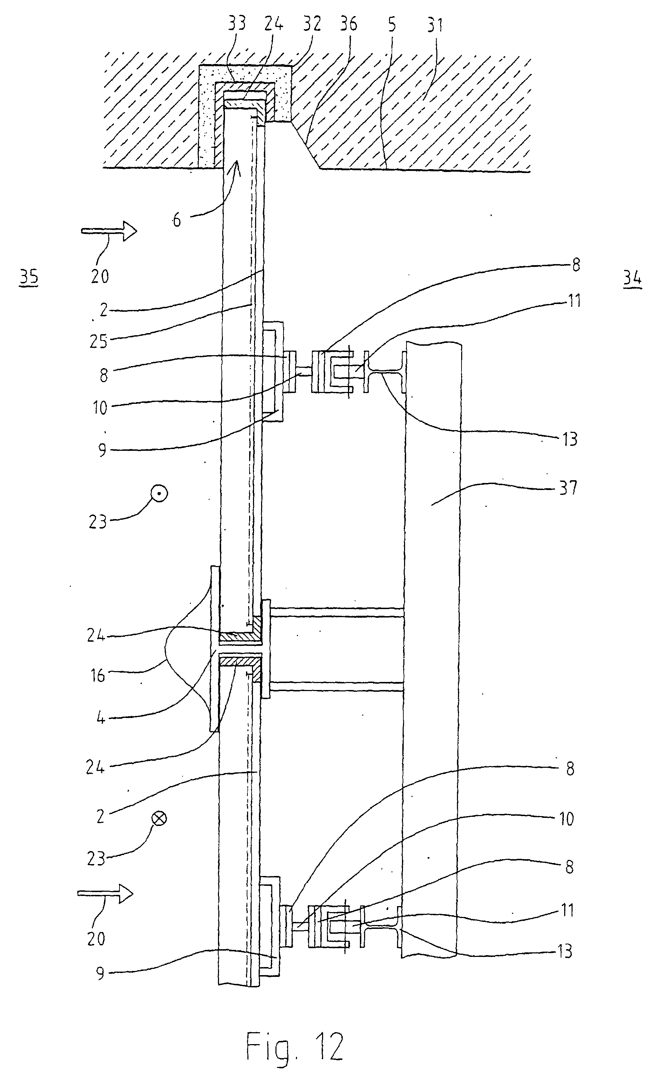

Fig. 12 zeigt einen Schnitt durch die Siebvorrichtung etwa auf halber Höhe. Die Darstellung entspricht somit derjenigen der Fig. 11, wobei aufgrund der Lage des Horizontalschnitts das obere Kettenrad 12a, die Antriebswelle 14, der Antriebsmotor 15, der Sprühbalken 17 mit den Sprühdüsen 18 und die Schmutzrinne 19 mit der Rinne 22 nicht zu erkennen sind.

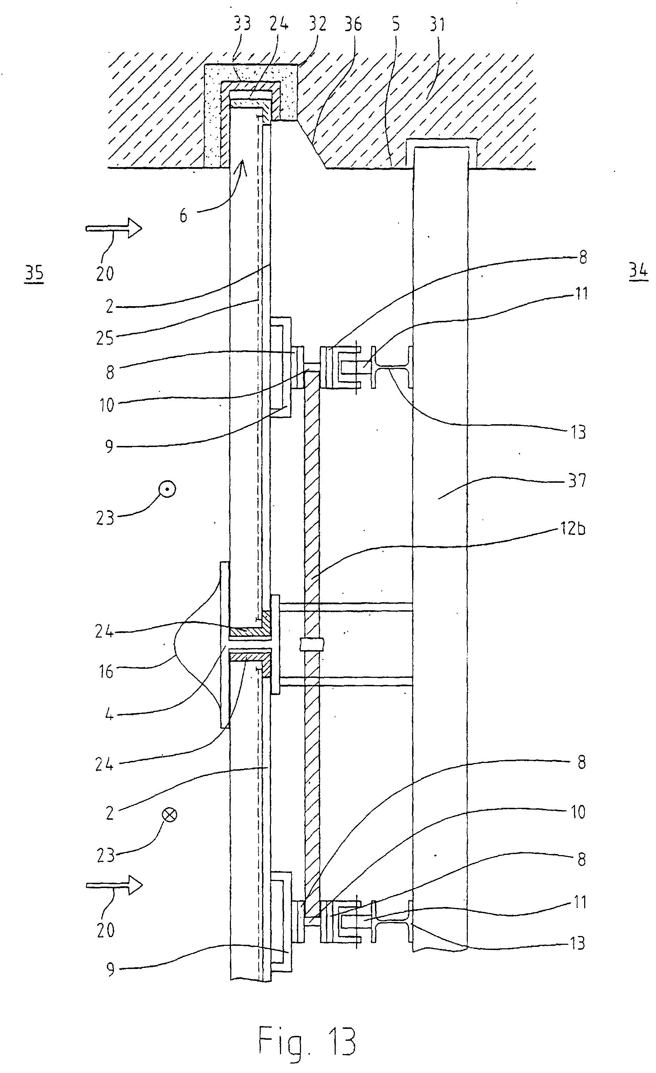

Die Fig. 13 zeigt einen entsprechenden Horizontalschnitt im Bereich des unteren Kettenrades 12b, das nicht angetrieben ist. Die Darstellung der Fig. 13 entspricht somit derjenigen von Fig. 12, wobei zusätzlich das untere Kettenrad 12b zu erkennen ist. Die Querverstrebung 37 ist in einer Vertiefung in der Wand 5 verankert.

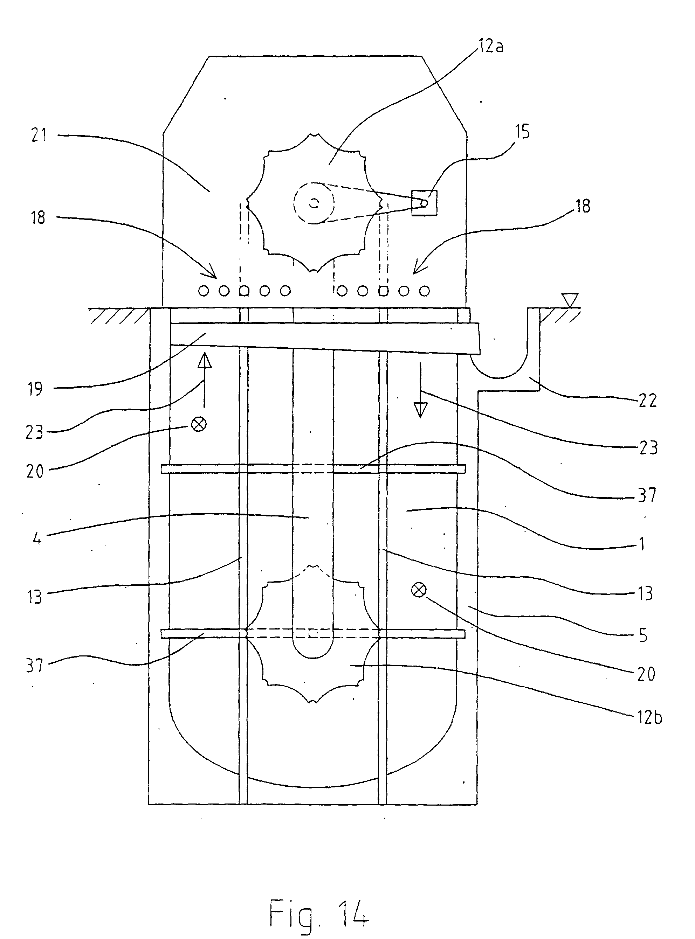

Figur 14 zeigt die Gesamtvorrichtung in einer schematischen Frontansicht. Das Endlossiebband 1, das in die den Flüssigkeitsstrom 20 begrenzenden Außenwandungen 5 eingestellt ist, ist neben dem Mittelführungsteil 4, der Schmutzrinne 19 und der Rinne 22 zu erkennen. Nach oben sind das Endlossiebband 1 sowie die zugehörigen Antriebsund Abreinigungsaggregate mit einer Abdeckung 21 versehen. Der Antriebsmotor 15 überträgt die Antriebskraft, in Abwandlung zu Fig. 11, mittels eine Kette auf das schematisch dargestellte obere Kettenrad 12a. Das untere Kettenrad 12b ist ebenfalls angedeutet, aber die Siebfelder 2 sind der Übersichtlichkeit halber nicht dargestellt. Man erkennt daher gut die senkrecht verlaufenden Siebband-Abstützelemente 13 sowie beispielhaft eingezeichnete Querverstrebungen 37, die in der erforderlichen Anzahl an den jeweils gewünschten Punkten eingesetzt sein können. Die Querverstrebungen 37 können bedarfsweise in der Wand 5 oder dem Boden verankert sein oder die Siebband-Abstützeiemente 13 verbinden.

### Bezugszeichenliste

- 1: Endlossiebband
- 2,2',2'': Siebfelder
- 3: Verbindungselemente
- 4: Mittelführungsteil
- 5: Außenwandung
- 6: Führung
- 7a: äußere Führungsrolle
- 7b: innere Führungsrolle
- 8,8': Verbindungsstangen
- 9: Befestigungsplatte
- 10: Gelenk
- 11: Stützrolle
- 12a: oberes Kettenrad
- 12b: unteres Kettenrad
- 13: Siebband-Abstützelement
- 14: Antriebswelle
- 15: Antriebsmotor
- 16: Profilierung
- 17: Sprühbalken
- 18: Sprühdüsen
- 19: Schmutzrinne
- 20: Flüssigkeitsstrom
- 21: Abdeckung
- 22: Rinne
- 23: Bewegungsrichtung (von 1)
- 24: Profilrahmen
- 25: Siebelement
- 26: erster, konvexer Abschnitt
- 27: zweiter, konkaver Abschnitt
- 28: Antriebskette
- 29: Schmutztasche
- 30: Abkantung
- 31: Bauwerk
- 32: Führungsnut
- 33: Führungsprofil
- 34: Reinwasserseite
- 35: Schmutzwasserseite
- 36: Anschrägung
- 37: Querverstrebung
- 38: Verbindungsabschnitt

## Patentansprüche

1. Siebvorrichtung zum mechanischen Abscheiden und Herausfördern von festen Bestandteilen, Festkörpern oder Feststoffen aus einer in einem Gerinne fließenden Flüssigkeit, insbesondere Sieb- oder Filterrechen für Prozeß-, Kühl- oder Abwasserströmungen oder in Klär- oder Wasserkraftanlagen,
mit einer Anzahl von im wesentlichen quer zur Fließrichtung des Flüssigkeitsstroms (20) ausgerichteten Siebfeldern (2, 2', 2''), die ein umlaufendes, in den Flüssigkeitsstrom (20) eintauchendes Endlossiebband (1) bilden, in dem mehrere in Bewegungsrichtung (23) des Endlossiebbands (1) aufeinanderfolgende, nebeneinander angeordnete Siebfelder (2, 2', 2'') eine gemeinsame Siebfläche in dem Gerinne bilden, sowie mit einem Antrieb (12, 14, 15) für das Endlossiebband (1),
**dadurch gekennzeichnet,**
**daß** die Siebfelder (2, 2', 2'') in dem Endlossiebband (1) derart aufeinanderfolgend angeordnet sind, daß die Umlaufbewegung des Endlossiebbandes (1) im wesentlichen insgesamt innerhalb einer einzigen Ebene gehalten ist, wobei die Schwenkachsen, um die die Siebfelder (2, 2', 2'') an Umlenkpunkten des Endlossiebbandes (1) verschwenkt werden, senkrecht zur Siebfläche liegen.

2. Siebvorrichtung nach Anspruch 1, **dadurch gekennzeichnet, daß** die Ebene der Umlaufbewegung (23) der Siebfelder (1) im wesentlichen senkrecht zur Fließrichtung des Flüssigkeitsstroms (20) angeordnet ist.

3. Siebvorrichtung nach einem der vorhergehenden Ansprüche, **dadurch gekennzeichnet, daß** sie eine Führungseinrichtung (6) umfaßt, in der wenigstens einige Siebfelder (2, 2', 2'') seitlich geführt sind.

4. Siebvorrichtung nach einem der Ansprüche 1 bis 3, **dadurch gekennzeichnet, daß** die Siebfelder (2, 2', 2'') mittels Verbindungselementen (3) untereinander verkettet sind.

5. Siebvorrichtung nach Anspruch 4, **dadurch gekennzeichnet, daß** die Verbindungselemente (3) Teile einer Antriebskette für das Endlossiebband (1), insbesondere Laschen einer Antriebskette (28) bilden.

6. Siebvorrichtung nach einem der vorhergehenden Ansprüche, **dadurch gekennzeichnet, daß** die Siebfelder (2, 2', 2'') kreisförmig ausgebildet sind.

7. Siebvorrichtung nach einem der Ansprüche 1 bis 5, **dadurch gekennzeichnet, daß** die Siebfelder (2, 2', 2'') sichelförmig ausgebildet sind.

8. Siebvorrichtung nach Anspruch 7, **dadurch gekennzeichnet, daß** die Außenkonturen der sichelförmigen Siebfelder (2, 2', 2'') jeweils von zwei sich schneidenden Abschnitten (26, 27) zweier Kreise mit identischem Radius gebildet sind, wobei der Mittelpunkt des ersten Kreises (26), der den konvexen Abschnitt (26) der Außenkontur des Siebfeldes (2) bildet, auf dem zweiten Kreis liegt, der den konkaven Abschnitt (27) der Außenkontur des Siebfeldes (2) bildet.

9. Siebvorrichtung nach Anspruch 7, **dadurch gekennzeichnet, daß** die Außenkonturen der sichelförmigen Siebfelder (2, 2', 2'') jeweils von zwei sich nicht schneidenden Abschnitten (26, 27) zweier Kreise mit identischem Radius und zwei die Kreisabschnitte verbindenden, geradlinigen oder bogenförmigen Verbindungsabschnitten (38) gebildet sind.

10. Siebvorrichtung nach einem der Ansprüche 7 bis 9, **dadurch gekennzeichnet, daß** die sichelförmigen Siebfelder (2, 2', 2'') über Verbindungselemente (3), insbesondere Verbindungsstangen (8, 8'), untereinander verkettet sind, welche Verbindungselemente (3) jeweils einerseits im Mittelpunkt des ersten, den konvexen Abschnitt (26) der Außenkontur eines Siebfeldes (2) bildenden Kreises an diesem Siebfeld (2) angelenkt und andererseits, entlang des konvexen Abschnitts (26') der Außenkontur des benachbarten Siebfeldes (2') verschiebbar, am benachbarten Siebfeld (2') im Mittelpunkt von dessen ersten, den konvexen Abschnitt (26') von dessen Außenkontur bildenden Kreises angelenkt sind.

11. Siebvorrichtung nach Anspruch 10, **dadurch gekennzeichnet, daß** die Verbindungselemente (3) jeweils entlang des konvexen Teils der Außenkontur des zugehörigen benachbarten Siebfeldes (2, 2', 2'') an diesem geführt sind.

12. Siebvorrichtung nach einem der Ansprüche 4 bis 11, **dadurch gekennzeichnet, daß** die Verbindungselemente (3) auf der Reinwasserseite (34) des Endlossiebbandes (1) angeordnet sind.

13. Siebvorrichtung nach einem der vorhergehenden Ansprüche, **dadurch gekennzeichnet, daß** sie Siebband-Abstützelemente (13) umfaßt, die auf der Reinwasserseite (34) des Endlossiebbands (1), vorzugsweise im Bereich der Mittelachse von Siebfeldern (2, 2', 2'') angeordnet sind.

14. Siebvorrichtung nach Anspruch 13, **dadurch gekennzeichnet, daß** das Endlossiebband (1) drehbare Stützelemente, z.B. Stützrollen (11) oder Kugeln zur Abstützung auf einem Siebband-Abstützelement (13) umfaßt.

15. Siebvorrichtung nach einem der vorhergehenden Ansprüche, **dadurch gekennzeichnet, daß** der sich abwärts bewegende Teil des umlaufenden Endlossiebbandes (1) und der sich aufwärts bewegende Teil des umlaufenden Endlossiebbandes (1) jeweils etwa eine rechte bzw. linke Hälfte des Flüssigkeitsstroms (20) abdecken, wobei dazwischen ein feststehendes Mittelführungsteil (4) angeordnet ist.

16. Siebvorrichtung nach Anspruch 15, **dadurch gekennzeichnet, daß** das Mittelführungsteil (4) im Bereich seines unteren Endes ortsfest verankert ist.

17. Siebvorrichtung nach einem der Ansprüche 15 oder 16, **dadurch gekennzeichnet, daß** wenigstens einige der Siebfelder (2, 2', 2'') im Mittelführungsteil (4) geführt sind.

18. Siebvorrichtung nach einem der vorhergehenden Ansprüche, **dadurch gekennzeichnet, daß** wenigstens einige der Siebfelder (2, 2', 2'') zum Führen in einer seitlich, vorzugsweise entlang der den Flüssigkeitsstrom (20) begrenzenden Außenwandung (5) angeordneten Führungseinrichtung (6) oder zum Führen in der Außenwandung (5) selbst ausgebildet sind.

19. Siebvorrichtung nach Anspruch 18, **dadurch gekennzeichnet, daß** die Siebfelder (1) an der Führungseinrichtung (6) gleitend oder mittels äußeren Führungsrollen (7a) führbar sind.

20. Siebvorrichtung nach einem der vorhergehenden Ansprüche, **dadurch gekennzeichnet, daß** sie mit einer Anzahl von Sprühdüsen (18) zum Abspritzen der aus dem Flüssigkeitsstrom (20) herausgehobenen Siebfelder (2, 2', 2'') des Endlossiebbandes (1), sowie mit einer auf der den Sprühdüsen (18) gegenüberliegenden Seite des Endlossiebbandes (1) angeordneten Schmutzrinne (19) versehen ist.

21. Siebvorrichtung nach einem der vorhergehenden Ansprüche, **dadurch gekennzeichnet, daß** die Maschenweite der Siebfelder (2, 2', 2'') zwischen 0,1 mm bis 10 mm, vorzugsweise zwischen 2 mm und 4 mm gewählt ist.

## Claims

1. Sieving device for mechanically separating and extracting solid components, solid bodies, or solid matter from a liquid flowing in a sluice channel, in particular, sieve or filter grating for process, cooling water, or effluent currents or for use in sewage treatment plants or hydroelectric power stations,
with a number of sieving panels (2, 2', 2'') which are substantially arranged in a transverse direction to the direction of flow of the liquid current (20), and which form a revolving endless sieve belt (1) immersing into the liquid current (20), on which endless sieve belt (1) a plurality of sieving panels (2, 2', 2'') which are sequentially arranged adjacent to one another in the direction of motion (23) of the endless sieve belt (1) form a common sieving surface in the sluice channel, and with a drive (12, 14, 15) for the endless sieve belt (1),
**characterized in that**
the sieving panels (2, 2', 2'') are arranged successively on the endless sieve belt (1) in such a way that the revolving motion of the endless sieve belt (1) is substantially comprised within one single plane, wherein the pivotal axes around which the sieving panels (2, 2',2'') are pivoted at points of deflection of the endless sieve belt (1) are perpendicular to the sieving surface.

2. Sieving device according to claim 1, **characterized in that** the plane of the revolving motion (23) of the sieving panels (2, 2',2'') is substantially perpendicular to the direction of flow of the liquid current (20).

3. Sieving device according to any one of the preceding claims, **characterized in that** it comprises a guide device (6), in which at least some sieving panels (2, 2', 2'') are laterally guided.

4. Sieving device according to any one of claims 1 to 3, **characterized in that** the sieving panels (2, 2', 2'') are linked together by connectors (3).

5. Sieving device according to claim 4, **characterized in that** the connectors (3) form part of a drive chain for the endless sieve belt (1), in particular, links of a drive chain (28).

6. Sieving device according to any one of the preceding claims, **characterized in that** the sieving panels (2, 2', 2'') have a circular structure.

7. Sieving device according to any one of claims 1 to 5, **characterized in that** the sieving panels (2, 2', 2'') have a crescent-shaped structure.

8. Sieving device according to claim 7, **characterized in that** the outer contours of the crescent-shaped sieving panels (2, 2', 2'') are respectively formed by two intersecting sections (26, 27) of two circles with the same radius, whereby the midpoint of the first circle (26), which forms the convex section (26) of the outer contour of the sieving panel (2), lies on the second circle, which forms the concave section (27) of the outer contour of the sieving panel (2).

9. Sieving device according to claim 7, **characterized in that** the outer contours of the crescent-shaped sieving panels (2, 2', 2'') are respectively formed by two non-intersecting sections (26, 27) of two circles with the same radius and two rectilinear or arced connecting sections (38) which connect the circular sections.

10. Sieving device according to any one of claims 7 to 9, **characterized in that** the crescent-shaped sieving panels (2, 2', 2'') are linked together by connectors (3), in particular, connecting rods (8, 8'), whereby the connectors (3) are each coupled to a sieving panel (2) on one side at the midpoint of the first circle, which forms the convex section (26) of the outer contour of this sieving panel (2), and are coupled on the other side to the adjacent sieving panel (2') at the midpoint of its first circle, which forms the convex section (26') of its outer contour, and can be displaced along the convex section (26') of the outer contour of the adjacent sieving panel (2').

11. Sieving device according to claim 10, **characterized in that** the connectors (3) are each guided along the convex part of the outer contour of the associated adjacent sieving panel (2, 2', 2'').

12. Sieving device according to any one of claims 4 to 11, **characterized in that** the connectors (3) are placed on the clean water side (34) of the endless sieve belt (1).

13. Sieving device according to any one of the preceding claims, **characterized in that** it comprises sieve belt struts (13) which are located on the clean water side (34) of the endless sieve belt (1), preferably near the central axis of the sieving panels (2, 2', 2'').

14. Sieving device according to claim 13, **characterized in that** the endless sieve belt (1) comprises rotating supports, e.g. support rollers (11) or balls for support on a sieve belt strut (13).

15. Sieving device according to any one of the preceding claims, **characterized in that** the downward-moving part of the revolving endless sieve belt (1) and the upward-moving part of the revolving endless sieve belt (1) respectively substantially cover the right or left half of the liquid current (20), whereby a fixed center guide (4) is arranged between the two halves.

16. Sieving device according to claim 15, **characterized in that** the center guide (4) is permanently fixed at its lower end.

17. Sieving device according to claims 15 or 16, **characterized in that** at least some of the sieving panels (2, 2', 2'') are guided in the center guide (4).

18. Sieving device according to any one of the preceding claims, **characterized in that** at least some of the sieving panels (2, 2', 2'') are designed to be guided in a laterally arranged guide device (6), preferably along the outer wall (5) adjacent to the liquid current (20) or to be guided in the outer wall (5) itself.

19. Sieving device according to claim 18, **characterized in that** the sieving panels (2, 2',2") can be guided on the guide device (6) by gliding or by means of exterior guide rollers (7a).

20. Sieving device according to any one of the preceding claims, **characterized in that** it comprises a number of spray jets (18) to spray off the sieving panels (2, 2', 2'') of the endless sieve belt (1) which are lifted from the liquid current (20), as well as a debris channel (19) situated on the side of the endless sieve belt (1) which faces the spray jets (18).

21. Sieving device according to any one of the preceding claims, **characterized in that** the selected mesh size of the sieving panels (2, 2', 2'') is between 0.1 mm and 10 mm, preferably between 2 mm and 4 mm.

## Revendications

1. Dispositif de criblage pour la séparation et l'expulsion mécaniques d'éléments solides, de corps solides ou de matières solides hors d'un liquide s'écoulant dans une rigole, en particulier des grilles de criblage ou de filtrage pour écoulements de procédé, d'eau de refroidissement ou d'eaux usées ou dans des installations d'épuration ou des centrales hydrauliques,
comportant une pluralité de champs de criblage (2, 2', 2") essentiellement orientés transversalement à la direction d'écoulement du flux de liquide (20), qui en règle générale sont reliés en chaîne les uns aux autres et forment une bande de criblage sans fin (1) circulant, plongeant dans le flux de liquide, dans laquelle plusieurs champs de criblage (2, 2', 2") se succédant, disposés les uns à côté des autres, constituent une surface de criblage commune, dans la rigole, ainsi qu'un entraînement (12, 14, 15) pour la bande de criblage sans fin (1),
**caractérisé en ce que**,
les champs de criblage (2, 2', 2") dans la bande de criblage sans fin (1) sont disposés en se suivant de manière telle que le mouvement circulatoire de la bande de criblage sans fin (1) est maintenu essentiellement totalement à l'intérieur d'un seul et même plan, les axes de pivotement, autour desquels pivotent les champs de criblage (2, 2', 2") aux points de renvoi de la bande de criblage sans fin (1), étant perpendiculaires à la surface de criblage.

2. Dispositif de criblage selon la revendication 1, **caractérisé en ce que** le plan du mouvement circulatoire (23) des champs de criblage (1) est orienté essentiellement perpendiculairement à la direction d'écoulement du flux de liquide (20).

3. Dispositif de criblage selon l'une des revendications précédentes, **caractérisé en ce qu'**il comporte un dispositif de guidage (6), dans lequel au moins quelques champs de criblage (2, 2', 2'') sont guidés latéralement.

4. Dispositif de criblage selon l'une des revendications 1 à 3, **caractérisé en ce que** les champs de criblage (2, 2', 2'') sont reliés entre eux en chaîne au moyen d'éléments de liaison (3).

5. Dispositif de criblage selon la revendication 4, **caractérisé en ce que** les éléments de liaison (3) constituent des pièces d'une chaîne d'entraînement pour la bande de criblage sans fin (1), en particulier des pattes d'une chaîne d'entraînement (28).

6. Dispositif de criblage selon l'une des revendications précédentes, **caractérisé en ce que** les champs de criblage (2, 2', 2") sont réalisée en forme de cercles.

7. Dispositif de criblage selon l'une des revendications 1 à 5, **caractérisé en ce que** les champs de criblage (2, 2', 2") sont réalisés en forme de faucille.

8. Dispositif de criblage selon la revendication 7, **caractérisé en ce que** les contours extérieurs des champs de criblage (2, 2', 2") en forme de faucille sont respectivement formés de deux cercles (26, 27) de rayon identique se coupant, le centre du premier cercle (26) qui forme la section convexe (26) du contour extérieur du champ de criblage (2), se situant sur le second cercle qui forme la section concave (27) du contour extérieur du champ de criblage (2).

9. Dispositif de criblage selon la revendication 7, **caractérisé en ce que** les contours extérieurs des champs de criblage (2, 2', 2") en forme de faucille, sont respectivement constitués de deux sections (26, 27) ne se coupant pas de deux cercles de rayon identique et de deux sections de liaison (38) rectilignes ou courbées reliant les deux sections de cercles.

10. Dispositif de criblage selon l'une des revendications 7 à 9, **caractérisé en ce que** les champs de criblage (2, 2', 2") en forme de faucille sont reliés entre eux, en chaîne, par des éléments de liaison (3) en particulier des tiges de liaison (8, 8'), lesquels les éléments de liaison (3) étant articulés respectivement d'une part au centre du premier cercle formant la section convexe (26) du contour extérieur d'un champ de criblage (2), sur ce champ de criblage, et d'autre part, capables de translation le long de la section convexe (26') du contour extérieur du champ de criblage voisin (2'), sur le champ de criblage voisin (26') au centre de son premier cercle formant la section convexe (26') de son contour extérieur.

11. Dispositif de criblage selon la revendication 10, **caractérisé en ce que** les éléments de liaison (3) sont guidés respectivement le long de la partie convexe du contour extérieur du champ de criblage (2, 2', 2") voisin correspondant, sur celui-ci.

12. Dispositif de criblage selon l'une des revendications 4 à 11, **caractérisé en ce que** les éléments de liaison (3) sont disposés sur le côté eau pure (34) de la bande de criblage sans fin (1).

13. Dispositif de criblage selon l'une des revendications précédentes, **caractérisé en ce qu'**il comporte des éléments de support de bande de criblage (13), qui sont disposés sur le côté eau pure (34) de la bande de criblage sans fin (1), de préférence dans la région de l'axe central de champ de criblage (2, 2', 2").

14. Dispositif de criblage selon la revendication 13, **caractérisé en ce que** la bande de criblage sans fin (1) comporte des éléments de support rotatifs, par exemple des galets de support (11) ou des billes pour le support sur un élément de support de bande de criblage (13).

15. Dispositif de criblage selon l'une des revendications précédentes, **caractérisé en ce que** la partie descendante de la bande de criblage sans fin (1) circulant et la partie ascendante de la bande de criblage sans fin (1) circulant, couvrent respectivement sensiblement une moitié droite et gauche du flux de liquide (20), une pièce de guidage centrale (4) fixe étant disposée entre.

16. Dispositif de criblage selon la revendication 15, **caractérisé en ce que** la pièce de guidage centrale (4) est ancrée fixe dans la région de son extrémité inférieure.

17. Dispositif de criblage selon l'une des revendications 15 ou 16, **caractérisé en ce qu'**au moins quelques uns des champs de criblage (2, 2', 2") sont guidés dans la pièce de guidage centrale (4).

18. Dispositif de criblage selon l'une des revendications précédentes, **caractérisé en ce qu'**au moins quelques champs de criblage (2, 2', 2") sont réalisés pour le guidage de préférence le long du dispositif de guidage (6) disposé dans la paroi extérieure (5) délimitant le flux de liquide (20) ou pour le guidage dans la paroi extérieure (5) elle-même.

19. Dispositif de criblage selon la revendication 18, **caractérisé en ce que** les champs de criblage (1) peuvent être guidés glissants sur le dispositif de guidage (6) ou au moyen de galets de guidage (7a).

20. Dispositif de criblage selon l'une des revendications précédentes, **caractérisé en ce qu'**il est pourvu d'une pluralité de buses d'aspersion (18) pour asperger les champs de criblage (2, 2', 2") de la bande de criblage sans fin (1) soulevés hors du flux de liquide (20), ainsi que d'une rainure pour saletés disposée sur un côté de la bande de criblage sans fin (1), en regard des buses d'aspersion (18).

21. Dispositif de criblage selon l'une des revendications précédentes, **caractérisé en ce que** le vide de maille des champs de criblage (2, 2', 2") est choisi entre 0,1 mm et 10 mm, de préférence entre 2 mm et 4 mm.
